# EUROPEAN PATENT SPECIFICATION

(11) **EP 0 734 992 B1**
(45) Date of publication and mention of the grant of the patent: **15.01.2003**
(21) Application number: 95108237.9
(22) Date of filing: 29.05.1995
(51) Int. Cl.: G01F 1/24, G01F 1/26, G01D 5/20, F15B 11/04, B66B 1/04

(54) **Servo control for hydraulic elevator**
Servosteuerung eines hydraulischen Aufzugs
Servocommande pour un ascenseur hydraulique

(30) Priority: 28.03.1995 US 412247
(43) Date of publication of application: 02.10.1996
(73) Proprietor: Blain, Roy W., D-74078 Heilbronn (DE)
(72) Inventor: Blain, Roy W., D-74078 Heilbronn (DE)
(74) Representative: Finck, Dieter, Dr.Ing.

(56) References cited:
- EP-A- 0 437 995
- DE-A- 4 239 635
- GB-A- 1 378 345
- GB-A- 1 597 350
- US-A- 4 315 436
- US-A- 5 115 684
- US-A- 5 212 951
- PATENT ABSTRACTS OF JAPAN vol. 014, no. 046 (M-0926), 26 January 1990 & JP 01 275385 A (HITACHI), 6 November 1989,
- PATENT ABSTRACTS OF JAPAN vol. 008, no. 202 (P-300), 14 September 1984 & JP 59 087321 A (HITACHI SEISAKUSHO), 19 May 1984,

## Description

This invention relates to a hydraulic elevator control system comprising a flow channel sensing device.

Hydraulic elevators should approach their scheduled stopping positions gently and accurately. To establish alignment of the bottom of an elevator and a storey floor when stopping following an upward travel, the stopping point is approached from below at a creeping speed of travel during the final stage of approach. Known valves employing hydraulic mechanical methods of speed control are to varying degrees load and viscosity dependent. Such valves, correctly designed, offer a high degree of reliability combined with good ride qualities, but are not suitable for remote, or self re-adjustment.

Such a drive control system for a hydraulic elevator is described in GB-A-1 378 345. The system comprises a check valve interposed in a pipe between a source of pressurized fluid and and an elevator cylinder, and a circulating or bypass valve interposed between the source of pressurized fluid and an oil collection vessel. The circulating or bypass valve is biased in a direction of opening thereof and has a chamber connected to the source of pressurized fluid through a restrictor and to the oil collection vessel through a two-position valve. A setting valve operates as a function of the position of a sealing element of the check valve. The setting valve has a setting element which is directly connected to said sealing element, whereby a displacement of the sealing element produces an equal displacement of the setting element.

The check valve is urged towards a closed position by a compression spring in conventional manner and opened to a greater or lesser extent depending on the volume of through-flow. A stroke performed by the check valve provides a parameter for controlling the circulating valve. The required volume of fluid governing the opening of the check valve is ducted to the elevator cylinder on the one hand, and on the other hand the total quantity of unnecessary fluid complementarily delivered by a source of pressurized fluid, such as a pump, goes back to the oil storage container through the circulating valve. Upon changing from full speed to creeping speed of travel of the elevator, the circulating valve is opened first, thereby relieving the pressure in the pump chamber. A flow passage of the check valve will be adapted to the volume of oil still flowing to the cylinder. Thus, forcible closing of the check valve is eliminated.

US-A-5 212 951 refers to an elevator system comprising an elevator car, a plunger, a hydraulic cylinder, a valve and a conventional variable speed, reversible motor and a pump. The pump and the motor are disposed within a tank which is filled with hydraulic fluid. The motor powers the pump to provide a fluid pressure force to raise and lower the elevator. The system may include a pressure relief valve and a manual lowering valve. The valve comprises a housing, a check valve, a solenoid valve and an activation assembly. The valve is disposed in a line passing fluid between the variable speed pump and the cylinder.

The fluid pressure force from the pump acts upon one side of the valve. The fluid pressure force of fluid in the cylinder acts upon the other side of the valve. The solenoid valve is provided to control a separate circuit on the pump side of the valve. This separate circuit directs the pump fluid pressure force behind the valve until the sum of the fluid pressure acting on the pump side of the valve overcomes the fluid pressure on the cylinder side of the valve to open the valve. By balancing the pressure on the valve on the pump and cylinder sides of the valve before opening the valve, the elevator cab may start to descend gently and safely.

The check valve comprises a frustoconical portion connected with the activation assembly and cooperates with the seat of a valve chamber provided in the housing. A position sensor extending into the valve chamber abuts the frustoconical portion when seated against the seat. A computer is provided for controlling the solenoid valve in the variable speed motor. Once the valve is opened, the position sensor alerts the computer that the variable speed motor may be controlled to follow a chosen speed profile to lower the elevator cab to a next landing. Such a profile allows the motor to gradually slow to control the downward rate of acceleration, go into reverse and then reverse again to slow the cab as it approaches the landing.

Such an induction-type sensor serves only to alert the computer that the conically-shaped check valve is open. The sensor is otherwise inadequate to register the distance the check. valve is opened. Thus, a servo-controlling of the movement of the elevator is not possible.

In recent years there has been a demand on some installations for more consistent traveling times between floor levels. Attempts have been made to meet such demand with computer controls. This has not, however, added to the reliability of operation of the elevator. On the contrary, experience so far has shown that where the principles of computer control to achieve the new demand are employed, problems and call backs have been more frequent than with the mechanical valve.

In addition, the efficiency of those electronic servo valves on the market is relatively low. This is due to the excessive pressure drop through the flow rate measuring system of the valve during up travel or to fluid being bypassed in order to avoid an unstable condition arising when the target speed fed into the electronic program cannot be attained because of mechanical limits, such as the maximum output of the pump having already been reached.

US-A-5 115 684 discloses a flow meter which includes a piston that is biased by a spring to a neutral position within an encircling collar. The piston is movable relative to the collar by and in the direction of the fluid flow to be measured. A movement of the piston relative to the collar increases the fluid flow through one or more slots provided in one of such components. A Hall device senses the movement of a magnet connected to the piston, and produces an output signal. A linear relationship between the output signal and the rate of flow of the fluid can be achieved by utilization of a magnetic member whose magnetic intensity or cross-sectional shape varies along its length, or by causing the magnet to move along a curve or other path of travel that varies its distance from the probe of the Hall device.

This contactlessly operating flow meter has a constant measuring behaviour over its entire measuring range, with the output signal of the flow meter always being proportional to the rate of flow. However, this flow meter is limited to the installing of the obligatory magnet such that its movement is parallel to and of the same distance as the flow responsive piston itself. This limits the options of design for this : section of the valve. In addition, the magnetizing and installation of the magnet is critical and too often leads to unsatisfactory operation.

It is the object of the invention to provide a control system of a hydraulic elevator comprising a flow channel sensing device which system reliably provides a selectable variety of smooth and accurate travel characteristics of the hydraulic elevator using a minimum of electrical energy.

This object is achieved by the hydraulic elevator control system as defined in claim 1.

The principle of this system can be applied to the up-travel as well as to the down-travel cycle of the hydraulic elevator.

With the system according to the invention the larger movement of a fluid flow responsive disc can be converted to the smaller distance measuring capability of an economically available frequency inductive analogue distance measuring sensor. The rate of flow of fluid through the channel towards the hydraulic cylinder can be registered electronically by means of the computer for comparison with a desirable rate of flow for the purpose of initiating, where necessary, a correcting process to the rate of flow of fluid. Further, by employing the electronic flow sensor combined with the computer, the distance already travelled by the elevator can be assessed in order to effect a desired speed or change of speed of the elevator in the remaining distance to be travelled for accomplishing accuracy of stop and passenger comfort. Additionally the characteristics of foregoing operations are remembered and assessed by the computer such that control signals for following operations are revised to achieve shorter travelling times or other desired characteristics of travel performance.

With the system according to claims 3 to 6, overriding safety solenoids are included in the pilot channel system of the electronically controlled valve to rapidly reduce the flow of fluid in order to slow down the car in the event of uncontrolled motion in either direction of travel.

The invention is further explained with reference to the accompanying drawings, in which
- Fig. 1: is a schematic circuit diagram, illustrating an elevator up and down control valve comprising a flow sensing valve and
- Fig. 2: is a sectional view of the flow sensing valve of Fig. 1.

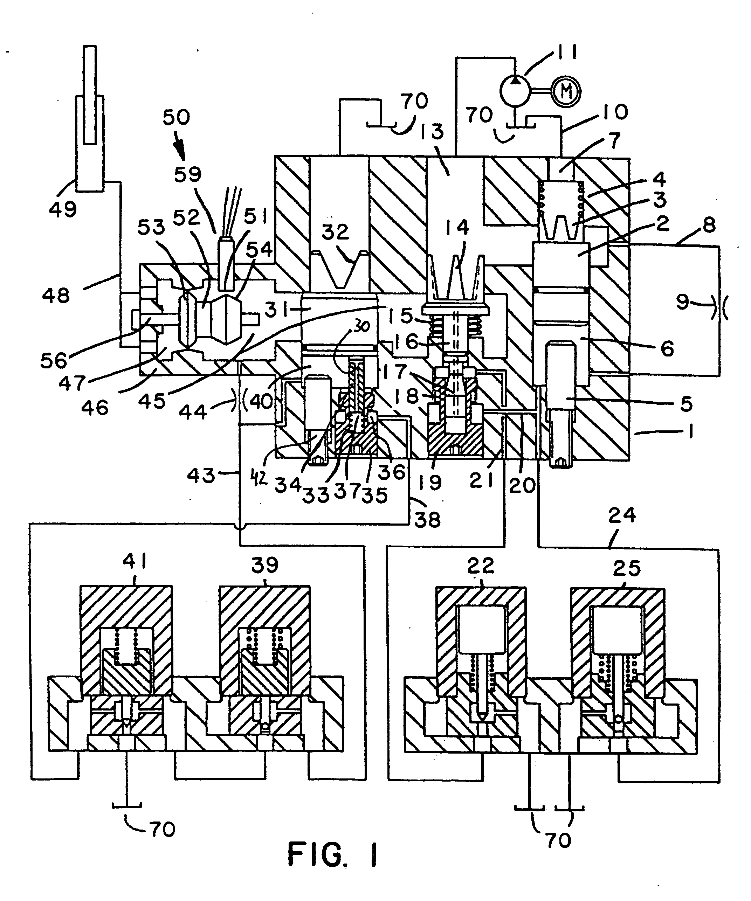

Referring to Fig.1, to start an upward travel of the elevator, an electric motor driving pump 11 is energized and fluid is dispatched into a pump chamber 13 of the control valve through an opening 3 of a bypass valve 2 and by way of return passage 7 and 10 back to tank 70. Simultaneously with the energizing of the motor, solenoid valves 22 and 25 are energized. Solenoid 22 is a normally open, open - close valve, solenoid 25 a normally open proportional type valve through which the volume of pilot oil flowing through fixed orifice 9 to bypass valve chamber 6 is allowed to escape to tank 70 at a rate inversely proportional to the strength of the electrical signal to the coil, tending to close the solenoid valve 25.

The strength of this electrical signal is determined by the flow sensing valve 50 which comprises a flow sensing spool 52 including a flow responsive disc 53 and a part 54 located along the axis of the spool 52 at the opposite end from the disc 53, said part 54 comprising two truncated conical members joined at their bases, at said junction said members defining an apex or peak in the longitudinal cross section of said spool 52 at which peak and at right angles to the axis of the flow sensing spool 52 a inductive analogue distance sensor 59 is situated. This flow sensing value 50 registers the flow rate of fluid to the cylinder 49 raising the elevator. The targeted movement of the flow sensing spool 52 programmed into a computer (not shown) is compared with the actual movement of the flow sensing spool 52, so that the necessary correction can be calculated and the corrected electrical signal applied to the solenoid valve 25. Should there be no or inadequate acceleration of the elevator as programmed, the computer increases the electrical output to this solenoid valve 25, further closing it and thereby causing the pilot pressure in the bypass chamber 6 to rise and the bypass valve 2 to advance against the opening force of bypass spring 4 until pressure in the pump chamber 13 rises above the pressure in a cylinder chamber 45. At this point the elevator begins to accelerate upwards. The continuing up-acceleration of the elevator and all subsequent motions ' including fast speed, deceleration, slow approach speed and stopping of the elevator are monitored by the flow sensing valve 50 which relays the actual converted values of volume of fluid flowing to the cylinder 49 representing the motion of the elevator, to the computer for comparison with the target values as described above.

Adjusting screw 5 limits the open or rest position of the bypass valve 2 and assures the initial pilot pressure in the system once the pump 11 is running.

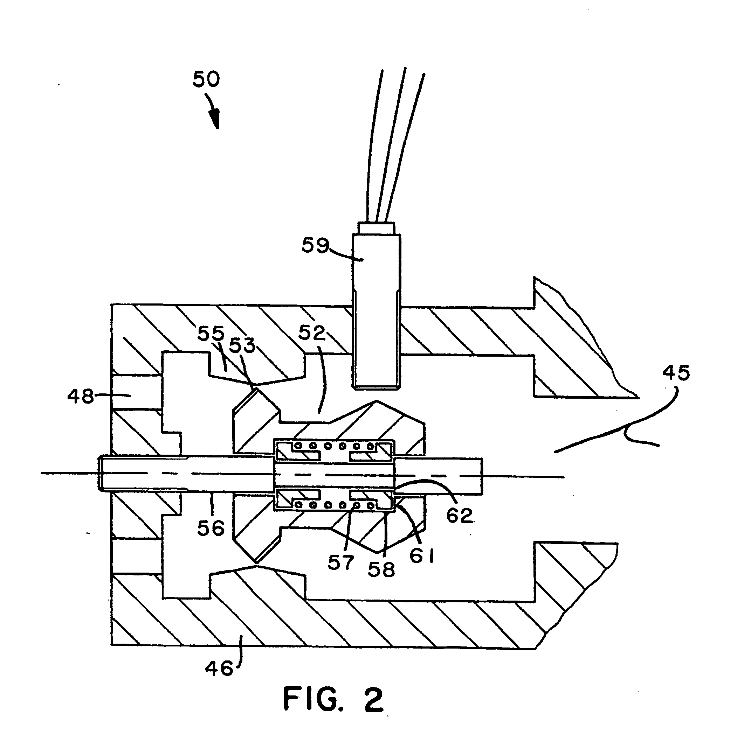

The flow sensing valve 50 as shown in Fig. 2 comprises a valve housing 4b having passages 45, 47 and 48, a flow ring 55 and the metal flow sensing spool 52 mounted on a shaft 56 fixed to the housing 46, the metal spool 52. being centrally positioned axially on a shaft spring 57 pressing outwards against sliding bushings 58 which press against internal shoulders 61 of the metal spool 52 and contacting shoulders 62 on the shaft 56. At one end of the metal spool 52 is integrated the flow responsive disc 53 fitting closely but sliding within the fixed flow ring 55. such that a flow of fluid either from passage 45 to passage 48 or reversed moves the disc 53 complete with the metal spool 52 in one direction or the other. The apex of the part 54 extending along the axis of the metal spool 52 on its outside diameter is centered beneath the sensing point 51 of the inductive analogue distance sensor 59 installed at right angles to the axis of the metal spool 52.

The volume of fluid flowing through the flow sensing valve 50 determines the size of the opening forced between. disc 53 and flow ring 55 which directly affects the distance of displacement of the metal spool 52 along the shaft 56, this to a proportional degree affecting the distance between the sensing point 51 of the distance sensor 59 and the conical surface of the part 54 of the metal spool 52. The changing distance is registered by the distance sensor 59 and transmitted to the computer for processing.

Throughout the normal up operation of the elevator the up safety solenoid valve 22 (FIG. 1) remains energized. If, due to a disturbance in the computer system, an undesirable motion of the elevator occurs, such as overspeeding or oscillating, by de-energizing solenoid 22, the elevator can be immediately slowed to a mechanically regulated low speed as long as the pump 11 continues to run and solenoid 25 remains energized. Alternatively should it be required that the elevator travel upwards at a particularly slow speed, for instance during inspection of the elevator or for the purpose or relevelling upwards in the event of the elevator having lowered away from the floor several millimeters due to oil leakage, cooling of the system or loading into the car, through the actuation of a relevelling switch (not shown), solenoid 25 is energized at maximum power and the pump 11 activated, while the up safety solenoid 22 remains de-energized.

A slow up levelling speed now ensues as the bypass valve 2 is advanced under the effect of pilot oil flow through fixed orifice 9 in line 8 into the bypass chamber 6, the exiting of this pilot oil flow from bypass chamber 6 through channel 20, channel 21, the up safety solenoid valve 22 to tank 70 occurring via variable orifice 18, which is partially restricted by the controlling edge 17 of the stem-like extension 16 to the check valve 14 as it covers to a lesser or larger degree the said variable orifice according to the position of the check valve 14 biased towards closing by check valve spring 15, whose hydraulically balanced posititan depends upon the volume of fluid passing through the opening 3 of the bypass valve 2, which determines the remaining volume of fluid passing from the pump chamber 13 to the cylinder chamber 45 of the valve 50 and thence to the cylinder, thus directly controlling the slow up levelling speed of the elevator. The position of variable orifice 18 which determines in which position the check valve 14 becomes hydraulically balanced and thereby the speed of the elevator, can be changed through adjusting screw 19 inwards or outwards to obtain the required slower or faster mechanical up levelling speed of the elevator.

This slow up levelling speed system is described in GB-A-1 378 345.

However, its application as a safety back-up feature to a sensitive electronic servo valve as described above is previously unknown.

To effect a downwards travel of the elevator, because of the functionally symmetrical construction of the flow sensing spool 52, the effect of fluid flow through the flow sensing valve 50 on the inductive distance sensor 59 and consequently-the signal transmitted to the computer from where the necessary corrections to the electrical power applied to the down proportional type solenoid valve 39 for the down travel are generated, is similar in principle to that described for the upward direction of travel except that the pump 11 is not required to run, the fluid flow and therefore the flow sensing spool 52, move in the opposite direction, that is in the general direction cylinder to tank 70 or cylinder chamber 47 to cylinder chamber 45 and that the down safety solenoid valve 41 is energized.

As with upwards travel, in the case of overspeeding or oscillating of the elevator, it may be required that the elevator's downward travel be brought down to a slow speed by de-energizing the coil of the proportional type solenoid valve 39 which closes, whilst the down safety coil of the down safety solenoid valve 41 remains energized and open.

A slow down levelling speed now ensues as the down valve 31 is advanced according to the effect of pilot fluid flowing through fixed orifice 44 in conduit 43 into the down valve chamber 40, the exiting of this pilot oil flow from the down valve chamber 40 through a channel 30 to channel 38 by way of orifice 36 which opening is restricted by the controlling edge 37 of the stem 34 which is pressed against the down valve 31 by the spring 33 as the controlling edge 37 of the stem 34 covers to a lesser or larger degree the said down effecting a hydraulically balanced position of the down valve 31, this position determining the extent of the opening in the down flow guide 32 through which fluid may flow from the cylinder to tank 70 to determine the downwards speed of the elevator.

Orifice 36 in down slow speed adjusting screw 35 can be shifted in its position relative to the down valve 31 by turning the adjusting screw 35 inwards or outwards so that the hydraulically controlled down slow speed can be mechanically set as required.

A further application of the down safety solenoid 41 is to completely stop the downwards movement of the elevator should it not be operating in the desired manner, by de-energizing the down safety coil.

Screw 42 mechanically limits the maximum opening of the down valve and thereby the maximum possible down speed of the elevator.

## Claims

1. A hydraulic elevator control system comprising a flow channel sensing device, said system comprising:
- a flowsensing device valve housing (46) with a channel (45, 47),
- a flow ring (55) having a center and a taper on both sides of its center and being fixed in the valve housing (46),
- a flow responsive metal spool (52) having an axis (56) and a diameter, one end of said spool (52) being in the shape of a disc (53), and said spool (52) being movable along the axis (56) within the flow ring (55), the disc (53) being centered by a spring at the center of the flow ring (55) under no flow conditions,
- a space between the disc (53) and the flow ring (55) through which fluid may pass, wherein said space opens proportionally in size to the rate of the fluid flowing through, whereby flow through the channel (45, 47) in either direction causes the disc (53) to be displaced,
- said spool (52) also comprising a part (54) located along the axis of the spool (52) at the opposite end from the disc (53), said part (54) comprising two truncated conical members joined at their bases, at laid junction said members defining an apex in the longitudinal cross section of said spool (52),
- an inductive analogue distance sensor (59) having a sensing point (51) and protruding through the valve housing (46) into the channel (45) at right angles to the axis of movement of the metal spool (52), whereby under conditions of no flow said apex of the spool (52) is located opposite the sensing point (51), and when flow takes place, the metal spool (52) moves in proportion to the flow
- a computer for receiving and assessing signals from the inductive analogue distance sensor (59), and delivering a proportional electrical output,
- a proportional type pilot solenoid valve (25, 39) for receiving the electrical output from the computer, and steplessly controlling a pilot oil flow through a pilot chamber (6, 40) and thus controlling a pilot pressure,
- a bypass valve (2) and a bypass spring (4) so connected that the increase or decrease in oil flow from the associated pilot chamber (6) causes the bypass valve (2) respectively to close down or open up the bypass spring (4),
- a down valve (31) and a down spring (33) so connected that the increase or decrease in oil flow from the associated pilot chamber (40) causes the down valve (31) respectively to close down or open up the down spring (33), whereby both valves (2, 31) affect the oil flow to a cylinder (49) for controlling the speed of an elevator, and
- a storage tank (70) for recycling oil and for receiving a portion of the oil flow from the bypass valve (2) or down valve (31) which is superfluous to attaining the correct flow of oil passing directly to the cylinder (49) causing the elevator to move at a targeted speed or change of speed.

2. System according to claim 1 wherein a down valve (31) for regulating the flow from the cylinder (49) to the tank (70) comprises
- an auxiliary two-position, i.e. open or closed solenoid valve (41) positioned hydraulically in series with the proportional type solenoid valve (39) for regulating the movements of said down valve (31), wherein said auxiliary two-position type solenoid valve (41) is energized and open under normal conditions of down travel, and can be rapidly closed when de-energized to shut off the flow of the pilot oil exiting from a down pilot chamber (40) of the down valve (31), and
- a cylinder pressure line (30) connected to an adjustable orifice (36) wherein the pilot oil flows while the auxiliary two-position solenoid valve (41) is de-energized, whereby the down valve (31) is closed to prevent the elevator from further overspeed descent.

3. System according to claim 2 further comprising a down slow speed adjusting screw (35) for regulating the adjustable orifice (36) whereby a hydraulically controlled down slow speed can be mechanically set, and said auxiliary two-position solenoid valve (41) when operated alone controls the limited opening of the down valve (31) through said down slow speed adjusting screw (35) and adjustable orifice (36), said auxiliary two-position solenoid valve (41) is energized electrically when operating while the proportional type solenoid valve (39) remains inactive.

4. System according to claim 2 or 3 further comprising a manual two-position, i.e. open or closed valve means, which is hydraulically connected in parallel with the auxiliary two-position solenoid valve (41), so that upon the manual activation of manual two-position solenoid valve, the elevator will lower at a slow speed without the necessity for electrical power.

5. System according to claim 4 wherein the hydraulic circuit comprises only the manual two-position valve.

## Patentansprüche

1. Steuersystem für einen hydraulischen Aufzug mit einer Durchflusskanal-Fühlvorrichtung, wobei das System
- ein Durchflussfühlvorrichtungs-Ventilgehäuse (46) mit einem Kanal (45, 47),
- einen in dem Ventilgehäuse (46) festgelegten Durchflussring (44) mit einem Zentrum und einer Verjüngung auf beiden Seiten seines Zentrums,
- einen auf Durchfluss ansprechenden Spulenkörper (52) aus Metall mit einer Achse (56) und einem Durchmesser, wobei ein Ende des Spulenkörpers (52) die Form einer Scheibe (53) hat und der Spulenkörper (52) längs der Achse (56) in dem Durchflussring (55) bewegbar ist, und wobei die Scheibe (53) durch eine Feder an der Mitte des Durchflussrings (55) unter Bedingungen ohne Durchfluss zentriert ist,
- einen Raum zwischen der Scheibe (53) und dem Durchflussring (55), durch den Fluid hindurchgehen kann, wobei der Raum sich größenmäßig proportional zum Durchsatz des durchströmenden Fluids öffnet, wodurch der Durchfluss durch den Kanal (45, 47) in jeder Richtung eine Verschiebung der Scheibe (53) herbeiführt,
- wobei der Spulenkörper (52) auch einen Abschnitt (54) hat, der längs der Achse des Spulenkörpers (52) am der Scheibe (53) gegenüberliegenden Ende angeordnet ist und der Abschnitt (54) zwei an ihren Basen verbundene Kegelstumpfelemente aufweist, die an ihrer Verbindung einen Scheitel im Längsschnitt des Spulenkörpers (52) bilden,
- einen induktiven analogen Distanzfühler (59), der eine Fühlstelle (51) hat und durch das Ventilgehäuse (46) in den Kanal (45) rechtwinklig zur Bewegungsachse des Spulenkörpers (52) aus Metall vorsteht, wodurch unter Bedingungen ohne Durchsatz der Scheitel des Spulenkörpers (52) gegenüber der Fühlstelle (51) angeordnet ist, und wenn ein Durchfluss einsetzt, sich der Spulenkörper (52) aus Metall proportional zum Durchfluss bewegt,
- einen Rechner zum Empfangen und Auswerten von Signalen von dem induktiven analogen Distanzfühler (59) und zum Abgeben eines proportionalen elektrischen Ausgangssignals,
- ein Proportional-Solenoid-Steuerventil (25, 39) zum Empfangen des elektrischen Ausgangssignals aus dem Rechner und zum stufenlosen Steuern eines Steuerölstroms durch eine Steuerkammer (6, 40) und somit zum Steuern eines Steuerdrucks,
- ein Umgehungsventil (2) und eine Umgehungsfeder (4), die so verbunden sind, dass die Zunahme oder Abnahme des Öldurchflusses aus der zugehörigen Steuerkammer (6) das Umgehungsventil (2) dazu bringt, die Umgehungsfeder (4) jeweils zusammenzudrücken oder aufweiten zu lassen,
- ein Abwärtsventil (31) und eine Abwärtsfeder (33), die so verbunden sind, dass eine Zunahme oder Abnahme im Öldurchfluss aus der zugehörigen Steuerkammer (40) das Abwärtsventil (31) dazu bringt, die Abwärtsfeder (33) jeweils zusammenzudrücken oder aufweiten zu lassen, wodurch beide Ventile (2, 31) auf den Öldurchfluss zu einem Zylinder (49) zur Steuerung der Geschwindigkeit des Aufzugs einwirken, und
- einen Speicherbehälter (70) für die Ölumwälzung und für die Aufnahme eines Teils des Öldurchflusses aus dem Umgehungsventil (2) oder dem Abwärtsventil (31) aufweist, der überflüssig ist, um den genauen Öldurchfluss zu erreichen, der direkt zum Zylinder (49) hindurchgeht und dazu führt, dass sich der Aufzug mit einer Zielgeschwindigkeit bewegt oder die Geschwindigkeit ändert.

2. System nach Anspruch 1, bei welchem das Abwärtsventil (31) zur Regulierung des Durchflusses aus dem Zylinder (49) zum Behälter (70)
- ein zusätzliches Solenoidventil (41) mit zwei Stellungen, d.h. offen oder geschlossen, das hydraulisch in Reihe zu dem Proportional-Solenoidventil (39) zur Regulierung der Bewegungen des Abwärtsventils (31) angeordnet ist, wobei das zusätzliche Solenoidventil (41) mit zwei Stellungen unter Normalbedingungen der Abwärtsbewegung erregt und offen ist und bei einer Entregung schnell geschlossen werden kann, um den Durchfluss des Steueröls zu unterbrechen, das aus der Abwärtssteuerkammer (40) des Abwärtsventils (41) austritt, und
- eine Zylinderdruckleitung (30) aufweist, die mit einer einstellbaren Öffnung (36) verbunden ist, wobei das Steueröl strömt, während das zusätzliche Solenoidventil (41) mit zwei Stellungen entregt ist, wodurch das Abwärtsventil (31) geschlossen und der Aufzug von einem weiteren Abstieg mit Übergeschwindigkeit abgehalten wird.

3. System nach Anspruch 2, welches weiterhin eine Einstellschraube (35) für geringe Abwärtsgeschwindigkeit zur Regulierung der einstellbaren Öffnung (39) aufweist, wodurch eine hydraulisch gesteuerte langsame Abwärtsgeschwindigkeit mechanisch eingestellt werden kann, und das zusätzliche Solenoidventil (41) mit zwei Stellungen, wenn es in Betrieb gesetzt wird, die durch die Einstellschraube (35) für langsame Abwärtsgeschwindigkeit und die einstellbare Öffnung (36) begrenzte Öffnung des Abwärtsventils (31) steuert, und das zusätzliche Solenoidventil (41) mit zwei Stellungen elektrisch erregt wird, wenn es in Betrieb ist, während das Proportional-Solenoidventil (39) inaktiv bleibt.

4. System nach Anspruch 2 oder 3, welches weiterhin eine manuelle Ventileinrichtung mit zwei Stellungen, d.h. offen oder geschlossen, aufweist, die hydraulisch zu dem zusätzlichen Solenoidventil (41) mit zwei Stellungen parallel geschaltet ist, so dass bei der manuellen Aktivierung des manuellen Solenoidventils mit zwei Stellungen sich der Aufzug mit einer geringen Geschwindigkeit absenkt, ohne dass dafür elektrische Leistung erforderlich ist.

5. System nach Anspruch 4, bei welchem der Hydraulikkreis nur das manuelle Ventil mit zwei Stellungen aufweist.

## Revendications

1. Système de commande d'ascenseur hydraulique comprenant un dispositif de détection de canal d'écoulement, ledit système comprenant :
- un carter de valve de dispositif de détection d'écoulement (46) avec un canal (45, 47),
- un anneau d'écoulement (55) ayant un centre et un cône des deux côtés de son centre et fixé dans le carter de valve (46),
- une bobine métallique sensible à l'écoulement (52) ayant un axe (56) et un diamètre, une extrémité de ladite bobine (52) ayant la forme d'un disque (53), et ladite bobine (52) étant mobile le long de l'axe (56) à l'intérieur de l'anneau d'écoulement (55), le disque (53) étant centré par un ressort au centre de l'anneau d'écoulement (55) dans des conditions sans écoulement,
- un espace entre le disque (53) et l'anneau d'écoulement (55) à travers lequel le fluide peut passer, dans lequel ledit espace s'ouvre à une dimension proportionnelle au débit de fluide le traversant, en conséquence de quoi l'écoulement dans le canal (45, 47) dans une direction quelconque provoque le déplacement du disque (53),
- ladite bobine (52) comprenant aussi une partie (54) située sur l'axe de la bobine (52) à l'extrémité opposée du disque (53), ladite partie (54) comprenant deux éléments coniques tronqués reliés à leur base, à ladite jonction lesdits éléments définissant un sommet dans la coupe longitudinale de ladite bobine (52),
- un capteur inductif de distance analogique (59) ayant un point de détection (51) et en saillie dans le carter de valve (56) dans le canal (45) perpendiculairement à l'axe de déplacement de la bobine métallique (52), en conséquence de quoi dans des conditions de non écoulement, ledit sommet de la bobine (52) est situé à l'opposé du point de détection (51), et lorsque l'écoulement a lieu, la bobine métallique (52) se déplace proportionnellement à l'écoulement,
- un ordinateur pour recevoir et évaluer les signaux du capteur inductif de distance analogique (59), et délivrant un sortie électrique proportionnelle,
- une électrovalve pilote du type proportionnel (25, 39) pour recevoir la sortie électrique de l'ordinateur, et réguler de manière continue un écoulement d'huile pilote par une chambre pilote (6, 40) et réguler ainsi une pression pilote,
- un clapet de dérivation (2) et un ressort de dérivation (4) installés de telle sorte que l'augmentation ou la réduction de l'écoulement d'huile à partir de la chambre pilote associée (6) cause respectivement la fermeture ou l'ouverture du ressort de dérivation (4) par le clapet de dérivation (2),
- un clapet de descente (31) et un ressort de descente (33) installés de telle sorte que l'augmentation ou la réduction de l'écoulement d'huile à partir de la chambre pilote associée (40) cause respectivement la fermeture ou l'ouverture du ressort de descente (33) par le clapet de descente (31), en conséquence de quoi les deux clapets (2, 31) agissent sur l'écoulement d'huile dans un vérin (49) pour réguler la vitesse d'un ascenseur, et
- un réservoir de stockage (70) pour recycler l'huile et pour recevoir une partie de l'écoulement d'huile du clapet de dérivation (2) ou du clapet de descente (31) qui est en excès pour atteindre l'écoulement d'huile correct passant directement au vérin (49) causant le déplacement de l'ascenseur à une vitesse ou un changement de vitesse fixé.

2. Système selon la revendication 1, dans lequel un clapet de descente (31) pour réguler le débit du vérin (49) au réservoir (70) comprend :
- une électrovalve auxiliaire (41) à deux positions, c'est-à-dire ouverte ou fermée, hydrauliquement positionnée en série avec l'électrovalve du type proportionnel (39) pour réguler les mouvements dudit clapet de descente (31), dans lequel ladite électrovalve auxiliaire à deux positions (41) est sous tension et ouverte dans des conditions normales de mouvement descendant, et peut être rapidement fermée lorsque mise hors tension pour fermer l'écoulement d'huile pilote sortant d'une chambre pilote de descente (40) du clapet de descente (31), et
- une conduite de pression de vérin (30) connectée à un orifice réglable (36) dans laquelle l'huile pilote s'écoule alors que l'électrovalve auxiliaire à deux positions (41) est hors tension, en conséquence de quoi le clapet de descente (31) est fermé pour empêcher une descente ultérieure à vitesse excessive de l'ascenseur.

3. Système selon la revendication 2, comprenant en outre une vis de réglage de descente à vitesse lente (35) pour réguler l'orifice ajustable (36), en conséquence de quoi une vitesse de descente lente commandée hydrauliquement peut être mécaniquement définie, et ladite électrovalve auxiliaire à deux positions (41), lorsque activée seule, commande l'ouverture limitée du clapet de descente (31) au moyen de ladite vis de réglage de descente à vitesse lente (35) et de l'orifice ajustable (36), ladite électrovalve auxiliaire à deux positions (41) est alimentée électriquement en fonctionnement tandis que l'électrovalve du type proportionnel (39) reste désactivée.

4. Système selon la revendication 2 ou 3, comprenant en outre un moyen de valve manuel à deux positions, c'est-à-dire ouvert ou fermé, qui est hydrauliquement connecté en parallèle avec l'électrovalve auxiliaire à deux positions (41), afin que, lors de l'activation manuelle de l'électrovalve manuelle à deux positions, l'ascenseur descende à une vitesse lente sans nécessiter d'énergie électrique.

5. Système selon la revendication 4, dans lequel le circuit hydraulique ne comprend que la valve manuelle à deux positions.
